# EUROPEAN PATENT APPLICATION

(11) **EP 3 923 126 A1**
(43) Date of publication of application: **15.12.2021**
(21) Application number: 20766626.4
(22) Date of filing: 28.02.2020
(51) Int. Cl.: G06F 3/0481

(54) **SPLIT-SCREEN DISPLAY METHOD, DEVICE, ELECTRONIC APPARATUS AND COMPUTER READABLE STORAGE MEDIUM**

(30) Priority: 04.03.2019 CN 201910161339
(71) Applicant: GUANGDONG OPPO MOBILE TELECOMMUNICATIONS CORP., LTD., Dongguan, Guangdong 523860 (CN)
(72) Inventor: CHEN, Biao, Dongguan, Guangdong 523860 (CN)
(74) Representative: Taor, Simon Edward William
(86) International application number: PCT/CN2020/077266
(87) International publication number: WO 2020/177638

(57) **Abstract**

The present disclosure provides a method, an apparatus, an electronic device, and a storage medium of performing a split-screen display. The method is applied to the electronic device, and includes: monitoring amplitude of rotation between the first screen area and the second screen area while detecting the foldable screen is in an unfolded state and a target interface is displayed on at least one of the first screen area and the second screen area; determining a first interface and a second interface according to the target interface while detecting the amplitude of rotation is within a specified amplitude range; displaying the first interface on the first screen area; and displaying the second interface on the second screen area.

## Description

### CROSS-REFERENCE TO RELATED APPLICATION

This application claims priority of Chinese patent application No. 201910161339.2 filed on March 4, 2019, the entire contents of which are herein incorporated by reference.

### BACKGROUND

This disclosure relates to the technical field of electronic devices, and particularly to a split screen displaying method and apparatus, an electronic device, and a storage medium.

When using the specified interface of an electronic device, for example, when watching a video or playing a game, the user will open a bullet-screen comments interface or chat interface. These bullet-screen comments interface and chat interface will affect the user's actions on the specified interface, resulting in a poor user experience.

### SUMMARY

In view of the above-mentioned problem, this disclosure proposes a split screen displaying method and apparatus, an electronic device, and a storage medium to solve such problem.

In a first aspect, embodiments of the present disclosure provide a split screen displaying method for an electronic device with a foldable screen, the foldable screen includes a first screen area and a second screen area on both sides of a folding line. the method includes: monitoring the amplitude of rotation between the first screen area and the second screen area in response to detecting the foldable screen is in an unfolded state and a target interface is displayed on at least one of the first screen area and the second screen area; determining a first interface and a second interface according to the target interface in response to detecting the amplitude of rotation is within a first preset amplitude range; displaying the first interface on the first screen area; displaying the second interface on the second screen area.

In a second aspect, the embodiments of the present disclosure provide a split screen displaying apparatus for an electronic device with a foldable screen, the foldable screen includes a first screen area and a second screen area on both sides of a folding line, the apparatus includes: a monitoring module, configured to monitor the amplitude of rotation between the first screen area and the second screen area in response to the foldable screen is in an unfolded state and a target interface is displayed on at least one of the first screen area and the second screen area; a determining module, configured to determine a first interface and a second interface according to the target interface when the amplitude of rotation is within a specified amplitude range; and a controlling module, configured to display the first interface on the first screen area, and display the second interface on the second screen area.

In a third aspect, the embodiments of the present disclosure provide an electronic device. The electronic device includes a memory and a processor. The memory is coupled to the processor. The memory stores instructions which, when being executed by the processor, cause the processor to implement the method mentioned above.

In a fourth aspect, the embodiments of the disclosure provide a computer-readable storage medium storing program codes thereon. The program codes are configured to be invoked by a processor to implement the method mentioned above.

### BRIEF DESCRIPTION OF THE DRAWINGS

In order to explain the technical solutions in the embodiments of the present disclosure more clearly, drawings needed in the description of the embodiments will be briefly introduced below. Obviously, the drawings described below illustrate only some embodiments of the present disclosure. For those skilled in the art, other drawings can also be obtained from these drawings without creative work.
FIG. 1 illustrates a schematic view of an electronic device provided by an embodiment of the present disclosure.
FIG. 2 illustrates a first schematic flowchart of a method of performing a split-screen display provided by an embodiment of the present disclosure.
FIG. 3 illustrates a schematic diagram of a first state of electronic device provided by the embodiment shown in FIG. 1 of the present disclosure.
FIG. 4 illustrates a second schematic flowchart of a method of performing a split-screen display provided by an embodiment of the present disclosure.
FIG. 5 illustrates a third schematic flowchart of a method of performing a split-screen display provided by an embodiment of the present disclosure.
FIG. 6 illustrates a fourth schematic flowchart of a method of performing a split-screen display provided by an embodiment of the present disclosure.
FIG. 7 illustrates a fifth schematic flowchart of a method of performing a split-screen display provided by an embodiment of the present disclosure.
FIG. 8 illustrates a schematic diagram of a second state of electronic device provided by the embodiment shown in FIG. 1 of the present disclosure.
FIG. 9 illustrates a sixth schematic flowchart of a method of performing a split-screen display provided by an embodiment of the present disclosure.
FIG. 10 illustrates a schematic diagram of a third state of electronic device provided by the embodiment shown in FIG. 1 of the present disclosure.
FIG. 11 illustrates a schematic diagram of a fourth state of electronic device provided by the embodiment shown in FIG. 1 of the present disclosure.
Fig. 12 illustrates a block diagram of an apparatus of performing a split-screen display provided by an embodiment of the present disclosure.
FIG. 13 illustrates a block diagram of an electronic device provided by an embodiment of the present disclosure, where the electronic device is configured to execute the method of performing a split-screen display according to the embodiments of the present disclosure.
FIG. 14 illustrates a storage unit configured to store or carry program codes provided by an embodiment of the present disclosure, where the program codes are configured for implementation of the method of performing a split-screen display according to the embodiments of the present disclosure.

### DETAILED DESCRIPTION

In order to enable those skilled in the art to better understand the solutions of the present disclosure, the technical solutions in the embodiments of the present disclosure will be described clearly and completely in conjunction with the accompanying drawings in the embodiments of the present disclosure.

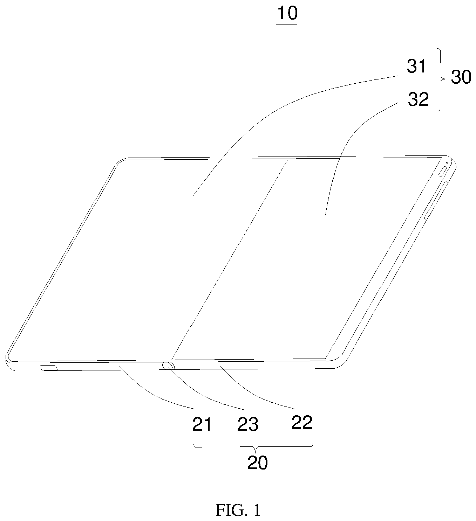

Referring to FIG. 1, a foldable electronic device 10 is illustrated. The foldable electronic device 10 can include a housing assembly 20 and a flexible display screen 30, the flexible display screen 30 can be a foldable screen. The housing assembly 20 can include a first bearing part 21, a second bearing part 22 and a shaft connecting part 23. The shaft connecting part 23 is rotatably coupled to the first bearing part 21 and the second bearing part 22, and is located between the first bearing part 21 and the second bearing part 22. The first bearing part 21 and the second bearing part 22 can rotate around the shaft connecting part 23 to be folded or expanded relative to each other. During the relative folding of the first bearing part 21 and the second bearing part 22, the first bearing part 21 and the second bearing part 22 can rotate around the shaft connecting part 23 to bend electronic device 10. In some embodiment of the present disclosure, the first bearing part 21 and the second bearing part 22 are axisymmetrical along the shaft connecting part 23. That is, when the first bearing part 21 and the second bearing part 22 are folded, the first bearing part 21 and the second bearing part 22 can overlap and/or be in proximity to each other.

The flexible display screen 30 can include a first screen area 31 and a second screen area 32 connected in turn, thus the foldable screen may include the first screen area 31 and the second screen area 32 on two sides of a folding line. The first screen area 31 is positioned on the first bearing part 21, and the second screen area 32 is positioned on the second bearing part 22. when the first bearing part 21 and the second bearing part 22 are folded, the flexible display screen 30 forms the surface of the electronic device 10 facing the user and exposed.

The foldable screen can include at least two states, the folded state and the unfold state. In the folded state, the first screen area 31 and the second screen area 32 can overlap, while in the unfolded state, there can be no contact between the first screen area 31 and the second screen area 32. In some embodiment of the present disclosure, when the foldable screen is unfolded, the angle between the first screen area 31 and the second screen area 32 is between approximately 170° and 190°. Specifically, the angle can be 180°, then the first screen area 31 and the second screen area 32 can form a common display screen, and an interface can be displayed in full screen on the common display screen.

In some embodiment of the present disclosure, the electronic device 10 may also include a third housing and a third screen area corresponding to the third housing. The third housing is rotatably connected between the first bearing part 21 and the second bearing part 22, and the third screen area is positioned on the third housing and is connected between the first screen area 31 and the second screen area 32. The first bearing part 21 and the second bearing part 22 can rotate relative to the third housing, and the first screen area 31 and the second screen area 32 can be folded relative to the third screen area, so that the electronic device 10 can be a triple fold electronic device that can be folded twice.

In some embodiment of the present disclosure, the display area of the third screen area can be approximately the same as the display area of the first screen area 31 and the display area of the second screen area 32. The first screen area, the second screen area and the third screen area can be folded into a three-tier structure.

In some embodiment of the present disclosure, the display area of the third screen area can be equal to or greater than the sum of the display area of the first screen area and the second screen area. When the foldable screen is folded, the first screen area and the second screen area can both be folded to fit into the third screen area. In some embodiment, the third housing and the third screen area on it can be positioned in other locations. For example, the third housing may be rotatably connected to a side of the first bearing part 21 away from the second bearing part 22, or the third housing may be rotatably connected to a side of the second bearing part 22 away from the first bearing part 21. In another embodiment, the electronic device 10 may also include a fourth housing and a fourth screen area corresponding to the fourth housing, or the electronic device 10 may also include a fifth housing and a fifth screen area corresponding to the fifth housing, so that the electronic device 10 can be an electronic device with a multiple fold structure. The above structure can ensure that the electronic device 10 has a large display area and a smaller volume, so as to facilitate the storage and carrying of the electronic device 10. This embodiment of the present disclosure does not limit the number of housings or screen areas included in the electronic device 10.

When displaying an interface in the unfold state, the above electronic device 10 displays a larger area and richer content than the other electronic device of a single screen, thus improving the user experience. However, in some research, the inventors found that when users use electronic device with foldable screens, for example, when they are watching videos or playing games, they may open a bullet screen comments or chat interface, which usually affects the user's experience of watching videos or playing games.

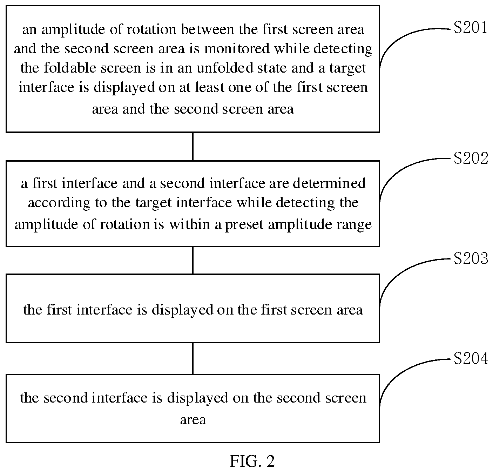

In view of the above-mentioned problem, this disclosure proposes a method of performing a split-screen display to solve such problem. Referring to FIG. 2, a schematic flowchart of a method of performing a split-screen display provided by an embodiment of the present disclosure is illustrated. This method can be implemented by electronic device 10 with the foldable screen as shown in FIG. 1, the foldable screen can include the first screen area 31 and the second screen area 32 on two sides of the folding line. The method of performing a split-screen display can include actions or operations at blocks illustrated in FIG.2.

At block S201, an amplitude of rotation between the first screen area and the second screen area is monitored while detecting the foldable screen is in an unfolded state and a target interface is displayed on at least one of the first screen area and the second screen area.

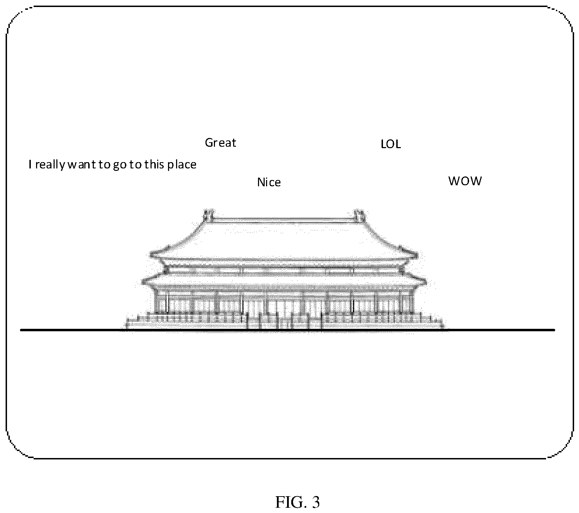

Referring to FIG. 3, when the foldable screen of the electronic device 10 is in the unfolded state, the first screen area and the second screen area constitute a complete common screen area.

At least one of the first screen area and the second screen area displays the target interface, for example, one of the first screen area and the second screen area displays the target interface, while the other screen area displays the interface of the desktop.

In the case of determining that only one screen area displays the target interface, it is necessary to determine whether the interface displayed on the other screen area is the specified type of interface. In some embodiment, the specified type of interface can be a system application interface. The client installed in the electronic device can be divided into system application and non-system application. The system application is the application program that is bound to the operating system of the electronic device. These applications are installed in the electronic device before the electronic device leaves the factory or the client of the system application is stored in the electronic device before the electronic device leaves the factory. When the electronic device is first turned on, the system application can install the client by the way of bootstrap, and the client of the system application will follow the electronic device's operating system upgrade. The system application is strongly coupled with the operating system, so it is generally unable to upgrade automatically. For example, camera applications rely heavily on the hardware and systems of electronic devices. However the non-system applications are clients that can be upgraded independently, rather than having to be upgraded along with the system.

In an implementation, the specified type of interface can be either the system desktop interface or the lock screen interface. It can also be black interface. If it is black interface, the screen area is not lit up, or if it is system desktop interface, the screen area is not in use. For example, if a screen area without the target interface is displaying the system desktop interface, it means that the screen area may be in a pending state and waiting for the user to select an application, to display the interface of the application.

In another embodiment of the present disclosure, the first screen area and the second screen area display the target interface together. The first screen area and the second screen area constitute the full screen area, and the target interface is displayed through the full screen area formed by the first screen area and the second screen area.

The amplitude of rotation between the first screen area and the second screen area is monitored while detecting the foldable screen is in an unfolded state and a target interface is displayed on at least one of the first screen area and the second screen area.

The detection of rotation between the first screen area and the second screen area may be carried out in such a way that the electronic device is provided with a monitor through which the amplitude of rotation between the first screen area and the second screen area is monitored.

In some embodiment of the present disclosure, the monitor may be distance sensors. The distance sensors are set in both of the first screen area and the second screen area. When the first screen area and the second screen area are folded, the distance detected by the two distance sensors changes, so that the folding angle of the two screen areas can be determined. The distance sensor may be at least one of the infrared distance sensor, laser distance sensor and ultrasonic distance sensor, which is not limited by this present disclosure.

In another embodiment of the present disclosure, the monitor may be an angle sensor. The angle sensor is provided at the position of the shaft connecting part 23 of the electronic device. Specifically, the foldable screen may include a shaft, the shaft can be positioned on the folding line, and the first screen area and the second screen area can be rotatably coupled to the shaft.

Monitoring the amplitude of rotation between the first screen area and the second screen area may be implemented by obtaining the rotation path of the shaft collected by the angle sensor. The angle sensor can be positioned on the shaft and determines the amplitude of rotation between the first screen area and the second screen area according to the rotation path. In addition, the monitor can also be a hall sensor, which is similar to the angle sensor and is also positioned on the shaft.

Specifically, an initial angle between the first screen area and the second screen area of the electronic device can be obtained first. For example, the initial angle is the angle collected by the angle sensor when the foldable screen is in the unfold state. When the angle collected by the angle sensor changes, the angle sensor collects the change of the angle from the beginning to the end of the rotation. Specifically, the angle sensor acquires the value of the final angle, and then acquires the value difference between the final angle and the initial angle, then obtaining the angle change, which is regarded as the amplitude of rotation between the first screen area and the second screen area.

At block S202, a first interface and a second interface are determined according to the target interface while detecting the amplitude of rotation is within a preset amplitude range.

The preset amplitude range is a preset range. Specifically, the preset amplitude range may include a lower limit and an upper limit, the lower limit is lower than the upper limit, and the lower limit can be 0°. This present disclosure does not limit the value of the preset amplitude range and the value of the lower limit and the upper limit. The value of the preset amplitude range, the lower limit and the upper limit can be determined according to user input, or can be set in advance before the electronic device leaves the factory.

For example, the amplitude of rotation is a value of rotation angle change. The lower limit can be 5°, and the upper limit can be 15°, then if the value of rotation angle change is greater than or equal to 5°, and less than or equal to 15°, then the amplitude of rotation can be determined to be within the preset amplitude range.

In addition, the preset amplitude range can be set to a lower value, which means that the specific value of the lower limit is low. When the user needs to split the screen, only need a little turn the angle between the first screen area and the second screen area, will be able to meet the preset amplitude range, making it easy for users to quickly operate the electronic device, and improve the user experience.

Furthermore, the lower limit can be set between the minimum rotation value and the upper limit, that is, the lower limit is greater than the minimum rotation value and less than the upper limit. Specially, the minimum rotation value is the minimum angle change value between the first screen area and the second screen area that can be detected by the electronic device. The lower limit is greater than the minimum rotation value, which can avoid the error operation caused by touching screen. For example, the minimum rotation value can be 2°; the lower limit can be 5°. The lower limit is greater than the minimum rotation value, and when the user touches the foldable screen, the angle value change caused by the user will not be identified as the angle change within the preset amplitude range, which can avoid the user's error operation.

The lower limit should not be set too high, in case the rotation angle between the first screen area and the second screen area is small, the rotation angle is less than the lower limit and is not recorded as a rotation operation.

If the amplitude of rotation is detected to be within the preset amplitude range, it is determined that the user intends to perform the split screen display operation, in which, the split screen display operation refers to displaying the first interface in the first screen area and displaying the second interface in the second screen area.

In some embodiment of the present disclosure, both the first interface and the second interface are the components within the target interface. The contents displayed in the first interface and second interface can be partially or completely the same or the first interface and the second interface can be content-related interfaces, and there is no limit on this present disclosure. For example, the second interface could be a floating window on the first interface, or, the second interface and the first interface together form the target interface. For example, if the target interface is a chat interface, the first interface can be a chat area and the second interface can be a text input area .

In some embodiment of the present disclosure, the first interface or the second interface is the interface within the target interface. For example, the first interface is the interface within the target interface or generated from the target interface, that is, the first interface is partially or exactly the same as the content displayed in the target interface.

In another embodiment of the present disclosure, the first interface is the target interface, and the second interface is generated based on other strategies. For example, the second interface can be the interface that is currently in the background, or can be the interface that the users launch more times or use for a long time in a period of time. Specifically, the number of launch times in a certain period of time can be counted, so as to get use records of each interface. The use records can include the marks of multiple interfaces, as well as the corresponding number of use and usage duration of each mark of interface. The usage duration can be calculated according to the starting time and the closing time of users' use of each interface. According to the use records of the interface, the number of use and the usage duration of each interface in a certain period of time(such as nearly a month) can be obtained, so that the second interface can be determined according to the number of use and the usage duration.

In another embodiment, a target time period that the current moment belongs to can be determined, and then the interface with highest frequency of use in the target time period is determined from the use records. Specifically, the frequency of use is determined according to the number of use and the usage duration, and the interface with the highest frequency of use can have the highest number of use or the longest usage duration. For example, the 24 hours of a day can be divided into 12 time periods according to the time interval of every 2 hours, then the current moment is 14:20, and the corresponding target time period is the time period from 14:00 to 16:00. The number of use and the usage duration of each interface in the time period from 14:00 to 16:00 are obtained from the use records, so as to determine the interface with the highest frequency of use as the second interface.

Specifically, the determination of the first interface and the second interface according to the display content of the target interface and other ways of determining the first interface and the second interface can be referred to subsequent embodiments.

At block S203, the first interface is displayed on the first screen area.

At block S204, the second interface is displayed on the second screen area.

In some embodiment, whether the first interface or the second interface is displayed in the first screen area, can be determined randomly. For example, after determining the first interface and the second interface, randomly determine a screen area from the first screen area and the second screen area that corresponds to the first interface for displaying the first interface, and another screen area that corresponds to the second interface for displaying the second interface. In addition, this present disclosure does not limit the order in which blocks S203 and S204 are to be implemented. Blocks S203 and S204 may also be implemented simultaneously.

In another embodiment, the first interface and the second interface can also be determined according to the user's usage status and the determined first and second interface modes. For more details, please refer to subsequent embodiments.

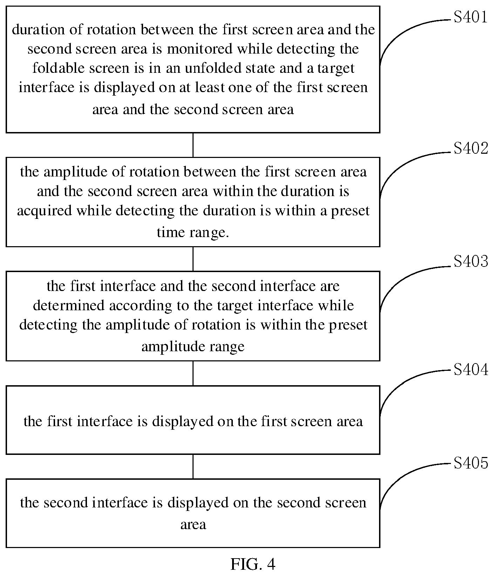

In addition, considering that the user may make error operations on the first screen area and the second screen area, the error operations can be determined by the duration of rotation between the first screen area and the second screen area. Specifically, referring to FIG. 4. The method of performing a split-screen display can include actions or operations at blocks as follows.

At block S401, duration of rotation between the first screen area and the second screen area is monitored while detecting the foldable screen is in an unfolded state and a target interface is displayed on at least one of the first screen area and the second screen area.

In some embodiment, when the user rotates the second screen area, the electronic device detects the rotation of the second screen area. For example, if the angle sensor set at the shaft detects that the second screen area is rotating toward the first screen area, then the initial moment of the rotation is recorded. Then, the rotation between the first screen area and the second screen area is monitored to determine the final moment when the rotation ends. The time period between the initial moment and the final moment is the duration of rotation.

Further, when the rotation between the first screen area and the second screen area stops, the rotation can be detected again during a preset time period. If the foldable screen is not rotated again, the rotation is determined to be end, and the moment when the rotation is determined to be end will be regarded as the final moment when the rotation stops. The preset time period can be a short period of time, for example, the preset time period can be 1 second, or 20ms, and there is no limitation in this present disclosure.

At block S402, the amplitude of rotation between the first screen area and the second screen area within the duration is acquired while detecting the duration is within a preset time range.

The electronic device records the initial moment of rotation and determines the angle between the first screen area and the second screen area as the initial angle at the initial time of rotation. Then the electronic device records final moment when the rotation stops and determines the angle between the first screen area and the second screen area as the final angle. The absolute value of the difference between the final angle and the initial angle is determined as the amplitude of rotation between the first screen area and the second screen area within the duration.

Similar to the above the preset amplitude range, the preset time range may also include a first-time length and a second-time length. Specially, the first-time length can be 0 seconds, that is to say, the duration is between the first-time length and the second-time length.

For example, the duration can be 50ms, the first-time length can be 10ms, the second-time length can be 5s. In this case, the duration is within the preset time range.

In addition, the preset time range needs to be set reasonably so that the rotation between the first screen area and the second screen area matches the user's operation habits. The preset time range cannot be too short or too long. If the preset time range is too short, the user may not be able to complete the operation. In addition, a slight touch or vibration which can occur in a short period of time may be recorded as rotation operation. If the preset time range is too long, it may record the user's multiple rotation actions as a single rotation operation, which affects the accuracy of the user's operation. Moreover, the preset time range should not be too short, otherwise, the user may not be able to complete the operation.

The first-time length cannot be set too short, that is, the value of first-time length is greater than the minimum time point. The minimum time point can be obtained by pre-detection. Specifically, Pre-detect how long it takes the user to change the angle between the first screen area and the second screen area of the foldable screen when clicking on the foldable screen or entering a swipe gesture on the foldable screen, and determine the length of time detected as the minimum time point. The value of first-time length is greater than the minimum time point, which can avoid the error operation caused by touching screen. In addition, the value of first-time length is greater than the minimum time point, which can also ensure that the user has enough time to rotate the first screen area or the second screen area.

In addition, the setting of the first-time length should not be too long, otherwise, when the user completes the rotation, the duration of rotation is shorter than the first-time length, that is, it is not within the preset time range, and this rotation will be invalid.

The second-time length can not be set too long, otherwise it may record the user's multiple rotation actions as a single rotation operation, which lead to a wrong record of number and amplitude of rotation.

If the detected duration is shorter than the preset time range, it means that the duration of rotation is too short, which may be due to the user accidentally touching the first screen area or the second screen area, resulting in an angle change between the first screen area and the second screen area. For example, when the electronic device is placed on a table or other support plane, the vibration of the table or the vibration of an incoming phone from the electronic device will cause the angle change between the first screen area and the second screen area. However, the duration of change is too short, that is, the duration is shorter than the preset time range, it can be regarded as an error operation, and split-screen operation will not be performed.

In addition, if detected duration is longer than the preset time range, it means that the rotation speed is too slow, or the duration is too long, then the rotation can also be regarded as an error operation. For example, if the electronic device is placed in a backpack or pocket, the first screen area and the second screen area of the electronic device are continuously rotating due to the user's actions, such as walking, then the split-screen operation will not be performed.

If the duration is within the preset time range, the following blocks will be performed.

At block S403, the first interface and the second interface are determined according to the target interface while detecting the amplitude of rotation is within the preset amplitude range.

At block S404, the first interface is displayed on the first screen area.

At block S405, the second interface is displayed on the second screen area.

It should be noted that the parts not described in detail in the above blocks could be referred to the foregoing embodiments and will not be repeated here.

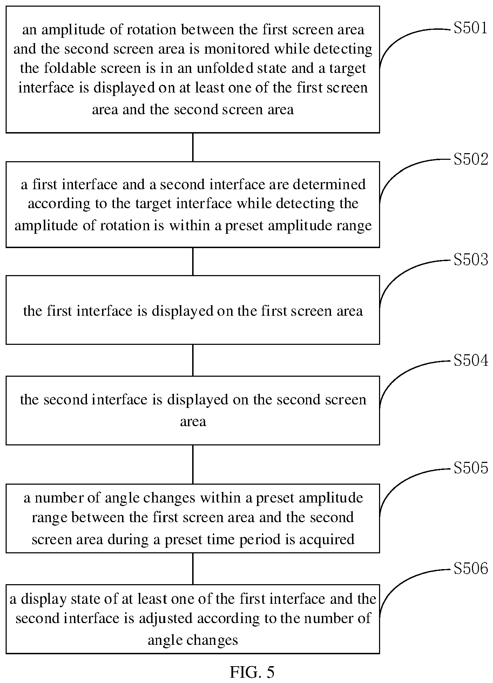

In some embodiment of the present disclosure, after the split-screen display is performed, the display can still be controlled by rotating the first screen or the second screen. Specifically, please refer to FIG. 5, which shows an embodiment of the method of performing split-screen display, includes actions or operations at blocks S501 to S506, blocks S501 to S504 can be similar to the S201 to S204 mentioned above, and will not be repeated again.

At block S505, a number of angle changes within a preset amplitude range between the first screen area and the second screen area during a preset time period is acquired.

Specially, the angle changes between the first screen area and the second screen area can include continuous increase, continuous decrease, alternating increase or decrease and irregular increase or decrease of angle within the preset time period. The preset time period can be determined according to user input, or can be set in advance before the electronic device leaves the factory, and there is no limitation in this present disclosure. For example, the preset time period is 5 minutes.

In some embodiment of the present disclosure, after the second interface is displayed on the second screen area, indicating that the amplitude of rotation between the first screen area and the second screen area is within the preset amplitude range. It is necessary to continue to monitor whether the angle between the first screen area and the second screen area changes again. If the angle changes again, determine whether the rotation angle is within the preset amplitude range, the preset amplitude range can be the preset amplitude range mentioned above. For details, please refer to the aforementioned embodiments, which will not be repeated here.

Determine whether a single angle change between the first screen area and the second screen area is within the preset amplitude range after the second interface is displayed on the second screen area. If so, the angle change is counted, and the number of angle changes is recorded continuously during the preset time period.

In some embodiment of the present disclosure, after displaying the second screen on the second screen area, the current angle between the first screen area and the second screen area can be determined as the new initial angle. Then, the angle between the first screen area and the second screen area is monitored during the preset time period. In the case of an angle change detected, if the absolute value of the difference between the changed angle and the new initial angle is within the preset amplitude range, the angle change will be recorded as one effective angle change. The current angle between the first screen area and the second screen area can be determined as another new initial angle, repeat the process above until the end of the preset time period.

For example, if the initial angle is α, the preset amplitude range can include the lower limit and the upper limit. The lower limit can be 5°, and the upper limit can be 15°, then the preset amplitude range is 5° to 15°. If the angle between the first screen area and the second screen area becomes (α+8°) during the first rotation, the change from the initial angle is 8°. The angle change between the first screen area and the second screen area is within the preset amplitude range and is recorded as one effective angle change. Then change the initial angle to (α+8°). If the first screen area or the second screen area is rotated again so that the angle between the first screen area and the second screen area becomes (α+20°), the difference between 20° and 8° is 12°, then the 12° is in the range of 5° to 15° and is recorded as the number of effective angle changes.

At block S506, a display state of at least one of the first interface and the second interface is adjusted according to the number of angle changes.

In some embodiment of the present disclosure, the corresponding relationship between the number of angle changes and the action is set in advance. The corresponding relationship can include multiple numbers of angle change and the corresponding action for each number of angle change. Moreover, the action is different for different applications, that is, different applications, the corresponding actions are also different.

Specifically, the above action can be swapping the display areas of the first interface and the second interface. When the number of angle changes is a specified number, the first interface will be displayed on the second screen area and the second interface will be displayed on the first screen area. Specifically, the specified number can be set on demand. For example, when the number of angle changes is one, then the first interface is displayed on the first screen area, and the second interface is displayed on the second screen area. Then, by changing the angle again, the first screen can be displayed on the second screen area, and the second screen can be displayed on the first screen area, that is, the first interface and the second interface swap the screens they are displayed on.

In addition, the above action can also be implementing page turning operation on the first interface and/or the second interface. Specifically, when angle changes again, determine whether the first interface or the second interface can include the next level interface, and then switch the first interface and/or the second interface to an Nth level interface according to the number of angle changes, and N corresponds to the number of angle changes. For example, the first interface is the video interface, and the second interface is the comment list interface. There are multiple comments in the comment list interface, and multiple pages of comments can be seen by turning the page, that is, the comment list interface can include multi-level comment pages.

For example, when the foldable screen is in an unfolded state and the target interface is displayed on at least one of the first screen area and the second screen area, rotate the first screen area and/or the second screen area, and the amplitude of rotation is within the preset amplitude range. Then, the first screen area displays the first interface and the second screen area displays the second interface. The first interface can be the video interface, and the second interface can be the first page of the comment list interface. Then, by changing the angle again, the second interface switches to the next interface, which is the second page of the comment list interface, and then, after changing three times, the second interface switches to the fourth page of the comment list interface.

For another example, the number of angle changes can be related to a number of fast-forward or fast-backward operations of the video interface, for example, for each angle change, the video interface will be fast-forward once. For N times of angle changes, the video interface will be fast-forward N times.

In some embodiment of the present disclosure, the number of angle changes can be used to adjust the volume of the video interface, For example, the volume increases when the first screen area and second screen area are rotated towards each other, while the volume increases by N levels when the angle changes N times. When the first screen area and the second screen area are rotated opposite each other, the volume decreases, and when the angle changes N times, the volume decreases by N levels.

Specifically, the action corresponding to the number of angle changes can be set in advance according to user's demand.

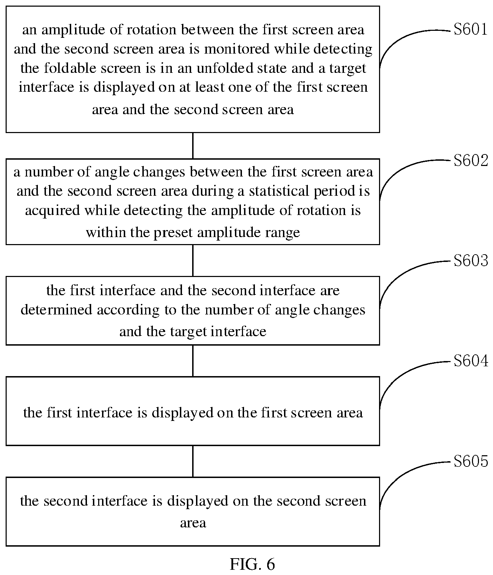

In some embodiment, a split screen display can be implemented according to the number of angle changes between the first screen area and the second screen area during the statistical period, the statistical period is a length of time during which the amplitude of rotation changes from an initial angle to a final angle. Specifically, please refer to FIG. 6, which shows an embodiment of the method of performing a split-screen display includes actions or operations at blocks S601 to S605. Block S601, block S604 and block S605 can be similar to the block S201, block S203 and block S204 mentioned above, and will not be repeated again. Specifically, the block S202 may include S602 and S603

At block S602, a number of angle changes between the first screen area and the second screen area during a statistical period is acquired while detecting the amplitude of rotation is within the preset amplitude range.

In some embodiment, the statistical period is a length of time during which the amplitude of rotation changes from an initial angle to a final angle. The specific implementation of obtaining the initial angle and the final angle as well as the number of angle changes can be referred to the aforementioned embodiments and will not be repeated here.

At block S603, the first interface and the second interface are determined according to the number of angle changes and the target interface.

In some embodiment, determine whether the number of angle changes is greater than a specified number. If the angle changes is greater than the specified number, determine the first interface and the second interface according to the target interface. Specifically, the implementation of determining the first interface and the second interface can refer to the aforementioned embodiments.

Specifically, the specified number can be set according to the actual scenarios, The angle between the first screen area and the second screen area is rotated from the initial angle to the final angle, and the number of angle changes is greater than a specified number, then the operation of split screen display will be implemented. For example, if the specified number is 2, then the preset amplitude range is 0° to 15°. Assuming the initial Angle is 1, the foldable screen is rotated for three times, the first time the angle changed from 1° to 4°, the second time the angle changed from 4° to 10°, the third time the angle changed from 10° to 8°, then the number of angle changes is 3. That is, the number of angle changes is greater than the specified number, then the operation of determining the first interface and the second interface according to the target interface is implemented.

In another embodiment, a first initial interface and a second initial interface can be determined according to the target interface, then adjust the first initial interface and the second initial interface according to the number of angle changes to acquire the first adjusted initial interface and the second adjusted initial interface. Finally determine the adjusted first initial interface as the first interface, and determine the adjusted second initial interface as the second interface. Specifically, the first initial interface and the second initial interface are determined in a way similar to the way that the first interface and the second interface are determined according to the target interface in the above embodiments. The way of adjusting the first initial interface and second initial interface according to the number of angle changes is similar to the way of adjusting the first interface and the second interface according to the number of angle changes mentioned in the above embodiments and will not be repeated.

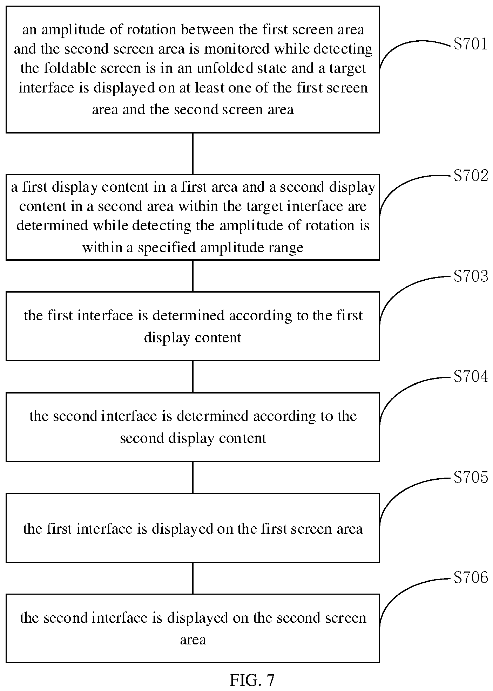

In addition, the first interface and second interface can be determined based on the content of the target interface. Specifically, please refer to FIG. 7, which shows an embodiment of the method of performing a split-screen display includes actions or operations at blocks S701 to S706, Block S701, block S705 and block S706 can be similar to the block S201, block S203 and block S204 mentioned above, and will not be repeated again. Specifically, the block S202 may include S702, S703 and S704.

At block S702, a first display content in a first area and a second display content in a second area within the target interface are determined while detecting the amplitude of rotation is within a specified amplitude range.

Specifically, the target interface can include multiple display areas; different display areas can display different contents. For example, the interface shown in FIG.3 can include a video playing area and a bullet screen comments area partially overlapping with the video playing area. The display content in the video playing area is the content corresponding to the video data, and the display content in the bullet screen comments area is the content corresponding to the bullet screen comments data.

At block S703, the first interface is determined according to the first display content.

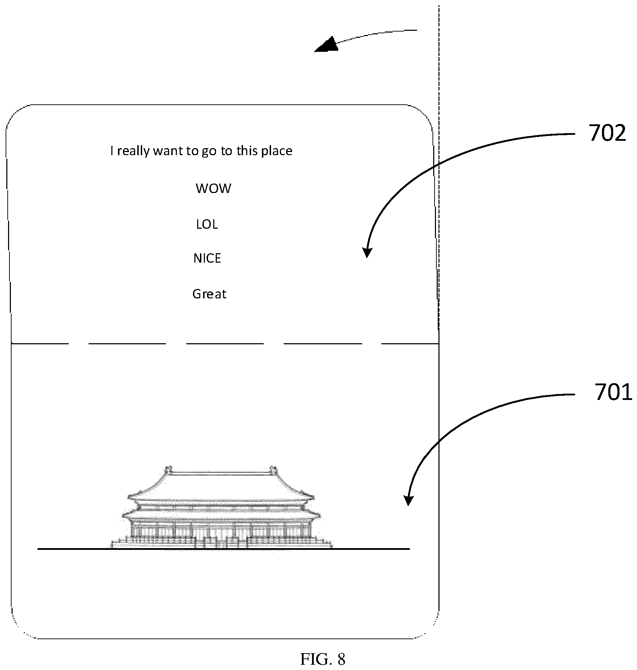

Specifically, the first interface can be generated from the first display content, where the first interface can have the same layout and as the first area in the target interface, and the display size of the first interface should correspond to the first screen area. For example, please refer to FIG. 3, the first display area is the video playing area, then the first interface can also be a video interface, that is, the first interface is also used to display the content of the video file. As shown in Figure 8, the first interface 701 is similar to the video playing area in Figure 3 and can play video files.

At block S704, the second interface is determined according to the second display content.

Referring to FIG. 8, the content displayed on the second interface 702 is the bullet screen comments. Specifically, the contents displayed on the first interface and the second interface are the contents of different areas in the target interface, so that the different areas on the target interface can be displayed on different screen areas. As shown in Figure 8, the bullet screen comments data will not overlap the content of the video, so as to avoid the impact on users' viewing of the video.

In addition, which screen area to display specific content can also be determined according to the content and the user's position with the screen.

Specifically, determine whether the first interface and/or the second interfaces includes the video interface. If the video interface is included, determine whether it is in a full screen playing mode. If so, determine the distance between the user and the first screen area, and distance between the user and the second screen area. Specifically, a camera is positioned on at least one of the first screen area and the second screen area, and it may be positioned on at least one of the first bearing part 21 and second bearing part 22. The image captured by the camera is obtained to determine whether the image includes a human face, and if so, determines an eye-gaze direction according to the image. For example, when a user's eyes gaze in different directions, the image of the human face is also different. Multiple image data sets can be obtained in advance according to machine learning algorithm. In the image data sets, multiple face images and the labeled eye-gaze direction of each face image can be included. When the face image captured by the camera is acquired, the machine learning algorithm can determine the human eye gaze direction, so as to determine the target screen area that the user is staring at, and the video interface is then displayed on the target screen area. For example, if the target screen area is the first screen area, the first interface is the video interface, and the first interface is displayed on the first screen area.

In addition, when the user rotates the angle between the first screen area and the second screen area, only one screen area can be rotated, then the rotated screen area can be detected and the unrotated screen area can be determined as the target screen area. and the interface used for playing video can be displayed on the target screen area. For example, if the target screen area is the first screen area, the first interface is the video interface, and the first interface is displayed on the first screen area.

In addition, the operations on the first interface and the second interface will interact with each other. For example, the first interface is a chat interface, while the second interface is a text input interface. The text entered by the user in the second interface can be displayed in the first interface.

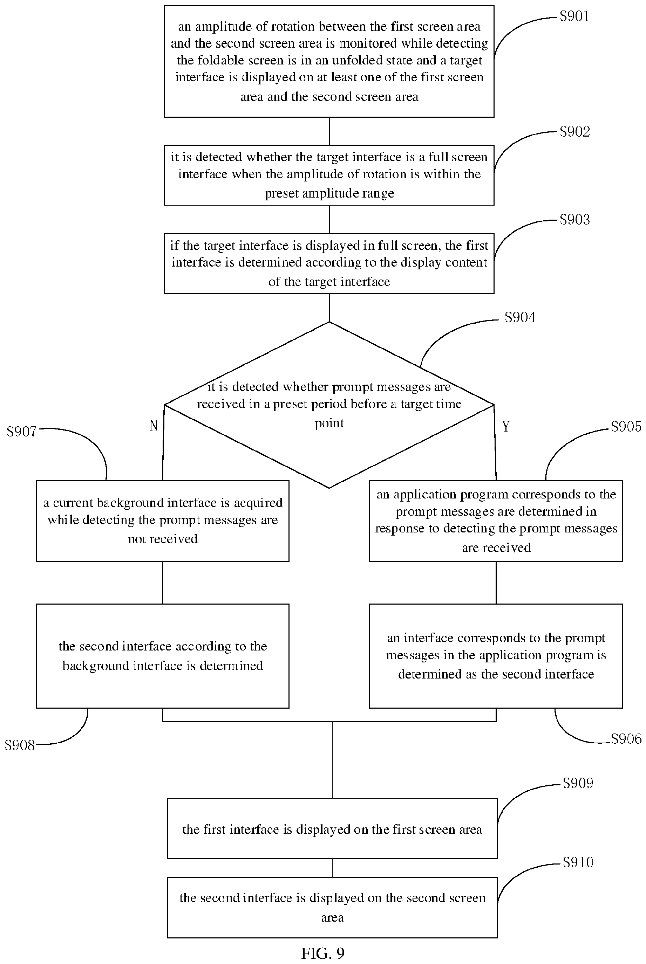

Furthermore, the first interface and the second interface can be determined according to current reminder time. Specifically, please refer to FIG. 9, which shows an embodiment of the method of performing a split-screen display including actions or operations at blocks S901 to S910, Block S901, block S909 and block S910 can be similar to the block S201, block S203 and block S204 mentioned above, and will not be repeated again. Specifically, the block S202 may include blocks S902 to S908.

At block S902, it is detected whether the target interface is a full screen interface when the amplitude of rotation is within the preset amplitude range.

The full screen interface is displayed in full screen on a screen area composed of the first screen area and the second screen area. The screen area composed of the first screen area and the second screen area may be the full screen area mentioned above.

Specifically, if the first screen area and the second screen area display the target interface, then determine the target interface is the full screen interface. As shown in FIG.3, the video interface is the full screen interface. In addition, it can also determine whether the target interface is the full screen interface according to the status of the target interface, the status is interface category, which can include categories such as a full screen playback interface, a floating window, or a popover.

At block S903, if the target interface is displayed in full screen, the first interface is determined according to the display content of the target interface.

If the target interface is a full screen interface, that is, the first screen area and the second screen area jointly display the target interface, the display content of the target interface will be determined as the first interface. That is to say, the content displayed on the first interface is still the corresponding display content of the target interface, but there are differences in typesetting or the size of the display area.

At block S904, it is detected whether prompt messages are received in a preset period before a target time point.

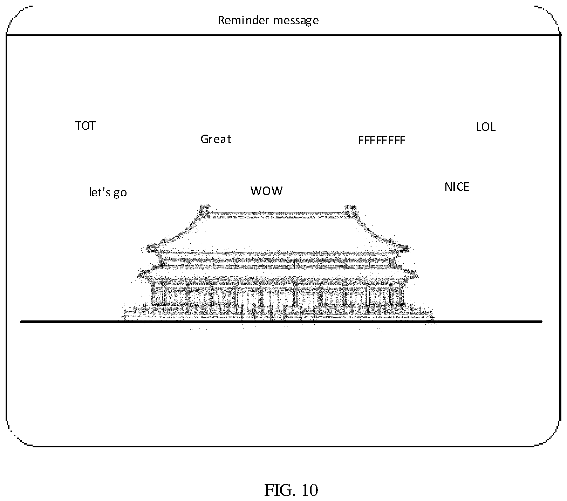

Specially, the target time point is a point of time at which the amplitude of rotation is detected to reach the final angle; That is to say, when the angle between the first screen area and the second screen area changes, it begins to detect whether the electronic device has received the prompt messages. As an implementation, the prompt messages are displayed in the top status bar, as shown in FIG. 10. The prompt messages are displayed in the top status bar and disappears for a certain period. Users can click the prompt messages to open the message reply interface. The prompt messages can be the content to be displayed sent by other terminals acquired by the electronic device, or it can be the content to be displayed generated within the electronic device based on some buried points. There is no restriction on this present disclosure.

The contents to be displayed sent by other terminals can include text messages, voice messages, video messages and other push contents sent by other terminals. In addition, the application within the electronic device can set the buried points, which represent the user's operation behavior for the application, the running state of the application or the running data. Specifically, the application's preset event occurrence can be used as a burial point. For example, an alarm clock or a reminder of a memo may be sent at the preset time for a memo.

The preset period can be a short time period. For example, the preset period can be 10 seconds. When the user uses the first screen area and the second screen area to display the video content, the electronic device receives the message and displays the message reminder, and the user turns the angle between the first screen area and the second screen area to be detected.

At block S905, an application program corresponds to the prompt messages are determined in response to detecting the prompt messages are received.

When the prompt messages are detected, the application corresponding to the prompt messages is determined.

At block S906, an interface corresponds to the prompt messages in the application program is determined as the second interface.

Determine the interface corresponding to the prompt messages as the second interface. For example, it could be the message reply interface for the prompt messages, or the main interface for the application for which the prompt messages corresponds.

After determining the second interface, the electronic device launches the application and displays the second interface of the application directly on the second screen area.

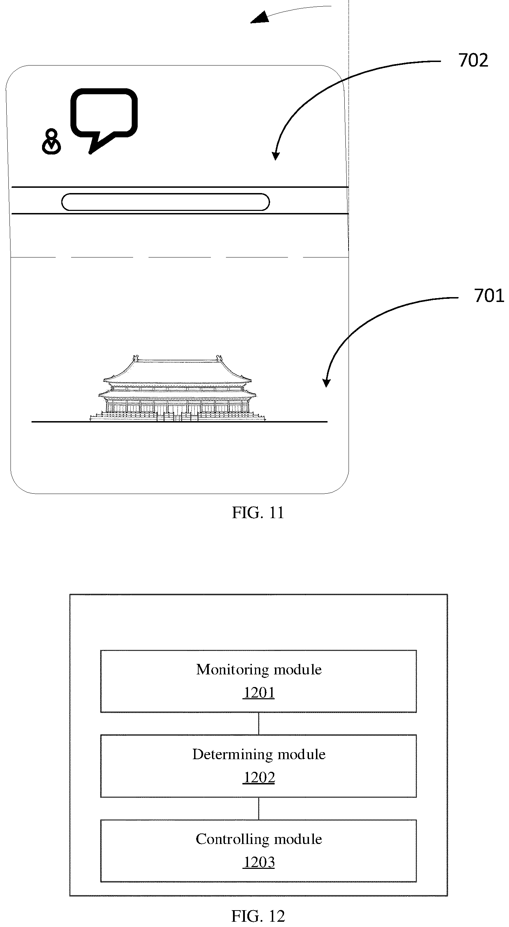

Therefore, in the full screen target interface, for example, the target interface is full screen video or game interface. If the electronic device receives the prompt messages, turn the angle between the first screen area and the second screen area, then the target screen is displayed on the first screen area and the second screen area displays the second interface corresponding to the prompt messages. For another example, a reply interface for the prompt messages could be displayed in the second screen area, where the user can reply to the prompt messages while the video is still playing on the first screen area. As shown in FIG. 11, the first interface 701 is consistent with the content of the target interface, both of which are used to display video content, while the second interface 702 is the reply interface for prompt messages.

At block S907, a current background interface is acquired while detecting the prompt messages are not received.

At block S908, the second interface is determined according to the current background interface.

Specifically, acquire the interface currently running in the background, that is, the background interface. The way to determine the second interface from the background interface is to determine the application that corresponds to each background interface, and then, the second interface is determined based on how many times or how long each application has been used in a certain period of time, which can be referred to the foregoing embodiments and will not be repeated here.

In addition, after determining that the first interface is the content corresponding to the target interface, and the second interface is the interface corresponding to the prompt messages, determine which of the first screen area and the second screen area is closer to the user. For example, it can be determined by images captured by the camera of the electronic device, or by the distance sensor of the electronic device to determine which screen area the user is closer to. The distance sensor can be the microphone and speakers of the electronic device.

The screen area close to the user is determined as the second screen area to display the second interface, so that the user can operate the prompt messages more conveniently, for example, reply to prompt messages.

Referring to FIG. 12, a block diagram of an apparatus of performing a split-screen display 1200 according to an embodiment of the present disclosure is illustrated. The apparatus of performing a split-screen display 1200 is applied to the electronic device mentioned above. The apparatus of performing a split-screen display 1200 may include a monitoring module 1201, a determining module 1202, and a controlling module 1203.

The monitoring module 1201 is configured to monitor the amplitude of rotation between the first screen area and the second screen area, while the foldable screen is in the unfolded state and a target interface is displayed on at least one of the first screen area and the second screen area.

The determining module 1202 is configured to determine a first interface and a second interface according to the target interface while detecting the amplitude of rotation is within a preset amplitude range.

Specifically, the determining module 1202 is configured to obtain a length of time during which the amplitude of rotation changes from an initial angle to a final angle while detecting the amplitude of rotation is within the preset amplitude range. The initial angle is the angle between the first screen area and the second screen area when the foldable screen is in the unfolded state. Determine whether the length of time is within the preset time range. If within the preset time range, the first interface and second interface are determined according to the target interface.

The determining module 1202 is also configured to determine a first display content in a first area and a second display content in a second area within the target interface. The first interface is determined according to the first display content. The second interface is determined according to the second display content.

The determining module 1202 is also configured to determine whether the target interface is a full screen interface. If the target interface is the full screen interface, the first interface is determined according to the display content of the target interface. Detect whether prompt messages are received in a preset period before a target time point. Specially, the target time point is a point of time at which the amplitude of rotation is detected to reach the final angle. If the prompt messages are received, determine the application corresponding to the prompt messages. The interface corresponding to the prompt messages in the application is determined as the second interface. If the prompt messages are not received, the current background interface in the background is obtained. The second interface is determined by the background interface.

The controlling module 1203 is configured to display the first interface on the first screen area, and display the second interface on the second screen area.

Specifically, an adjustment module can be included for obtaining the number of angle changes within a second preset amplitude range between the first screen area and the second screen area during a preset time period. A display state of at least one of the first interface and the second interface is adjusted according to the number of angle changes. Specifically, when the number of angle changes is a specified number, the first interface will be displayed on the second screen area and the second interface will be displayed on the first screen area.

Those skilled in the art can clearly understand that, regarding the specific working process of the apparatus and various modules described above, reference may be made to the corresponding process in the foregoing method embodiments, which will not be repeated here, for the convenience and conciseness of the description.

In the various embodiments provided in this disclosure, the coupling between the modules may be electrical, mechanical or in other forms.

In addition, the various functional modules in the embodiments of the present disclosure may be integrated into one processing module, or each module may exist alone physically, or two or more modules may be integrated into one module. The integrated module(s) mentioned above may be implemented in hardware or software functional modules.

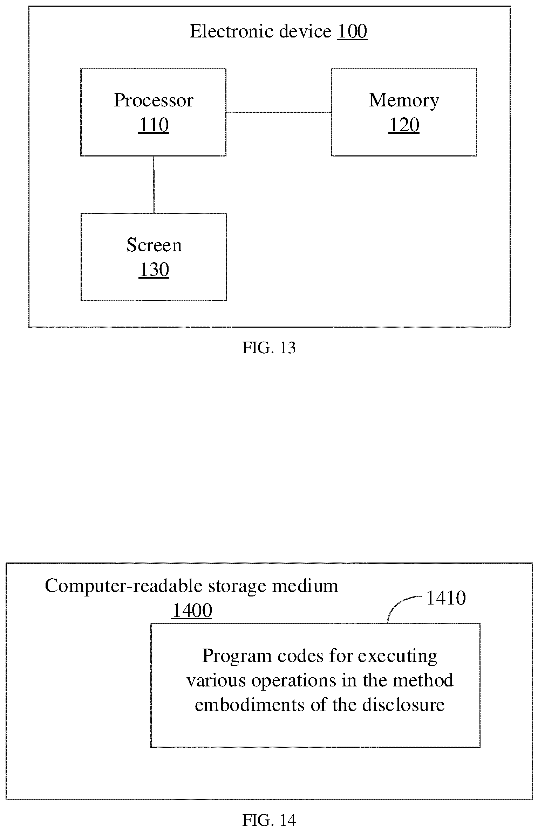

Referring to FIG. 13, a structural block diagram of an electronic device 100 provided by an embodiment of the present disclosure is illustrated. The electronic device 100 may be an electronic device capable of running application programs, such as a smart phone, a tablet computer or an e-book. The electronic device 100 in this embodiment can refer to the electronic device 10 in FIG.1 above. The electronic device 100 in this disclosure may include one or more of the following components: a processor 110, a memory 120, a foldable screen 130 and one or more application programs. The one or more application programs may be stored in the memory 120 and configured to be executed by one or more processors 110. The one or more programs are configured to execute the methods described in the foregoing method embodiments.

The processor 110 may include one or more processing cores. The processor 110 uses various interfaces and lines to connect various parts of the entire electronic device 100, and performs various functions and processes data of the electronic device 100 by running or executing instructions, program(s), code sets or instruction sets stored in the memory 120, and calling data stored in the memory 120. Optionally, the processor 110 may be implemented in at least one selected from a Digital Signal Processor (DSP), a Field-Programmable Gate Array (FPGA) and a Programmable Logic Array (PLA). The processor 110 may be integrated with one of a Central Processing Unit (CPU), a Graphics Processing Unit (GPU), a modem and the like, or a combination thereof. The CPU mainly processes the operating system, user interface and application programs. The GPU is responsible for rendering and drawing the display contents. The modem is used for the wireless communication. It can be understood that the above-mentioned modem may not be integrated into the processor 110, and may be implemented by a separate communication chip.

The memory 120 may include a Random Access Memory (RAM), or may also include a Read-Only Memory (ROM). The memory 120 may be used to store instructions, programs, codes, code sets or instruction sets. The memory 120 may include a program storage area and a data storage area. The program storage area may store instructions for implementing the operating system, instructions for implementing at least one function (such as a touch function, a sound playback function or an image display function), instructions for implementing the various method embodiments, and the like. The data storage area can store data (such as a phone book, audio and video data, chat record data) created by the electronic device 100 during use.

Referring to FIG. 14, a structural block diagram of a computer-readable storage medium provided by an embodiment of the present disclosure is illustrated. The computer-readable storage medium 1400 stores program codes 1410 therein, and the program codes 1410 are configured to be invoked by a processor to execute the method described in the foregoing method embodiments.

The computer-readable storage medium 300 may be an electronic memory, such as flash memory, Electrically Erasable Programmable Read Only Memory (EEPROM), EPROM, hard disk or ROM. Optionally, the computer-readable storage medium 300 includes a non-transitory computer-readable storage medium. The computer-readable storage medium 300 has a storage space for the program codes 310 for executing various method operations in the above-mentioned methods. These program codes may be read from or written into one or more computer program products. The program codes 310 may for example be compressed in a suitable form.

Finally, it should be noted that the above embodiments are only used to illustrate the technical solutions of the disclosure, rather than limit it. Although the disclosure has been described in detail with reference to the foregoing embodiments, those of ordinary skill in the art should understand that the technical solutions recorded in the foregoing embodiments may also be modified, or some technical features thereof may be equivalently replaced, and these modifications or replacements should not be considered as rendering the essence of the corresponding technical solution(s) depart from the spirit and scope of the technical solutions of the embodiments of the present disclosure.

## Claims

1. A method of performing a split-screen display in an electronic device with a foldable screen, wherein the foldable screen comprises a first screen area and a second screen area on two sides of a folding line, the method comprising:
monitoring amplitude of rotation between the first screen area and the second screen area while detecting the foldable screen is in an unfolded state and a target interface is displayed on at least one of the first screen area and the second screen area;
determining a first interface and a second interface according to the target interface while detecting the amplitude of rotation is within a specified amplitude range;
displaying the first interface on the first screen area; and
displaying the second interface on the second screen area.

2. The method of claim 1, wherein monitoring the amplitude of rotation between the first screen area and the second screen area while detecting the foldable screen is in the unfolded state and the target interface is displayed on at least one of the first screen area and the second screen area comprises:
monitoring duration of rotation between the first screen area and the second screen area, while detecting the foldable screen is in the unfolded state and the target interface is displayed on the at least one of the first screen area and the second screen area; and
determining whether the duration is within a specified time range;
acquiring the amplitude of rotation between the first screen area and the second screen area within the duration if detecting the duration is within a preset time range.

3. The method of claim 1 or 2, wherein determining the first interface and the second interface according to the target interface while detecting the amplitude of rotation is within the specified amplitude range comprises:
acquiring a number of angle changes between the first screen area and the second screen area during a statistical period while detecting the amplitude of rotation is within the specified amplitude range, and wherein the statistical period is the length of time between a change of the amplitude of rotation from an initial angle to the change within the specified amplitude.
determining the first interface and the second interface according to the number of angle changes and the target interface.

4. The method of claim 3, wherein determining the first interface and the second interface according to the number of angle changes and the target interface comprises:
determining the first interface and the second interface according to the target interface when the number of angle changes is greater than a preset number.

5. The method of claim 1 or 2, wherein determining the first interface and the second interface according to the target interface when the amplitude of rotation is within the specified amplitude range comprises:
determining a first initial interface and a second initial interface according to the target interface when the amplitude of rotation is within the specified amplitude range;
according to the number of changes;
determining the adjusted first initial interface as the first interface, and determining the adjusted second initial interface as the second interface.

6. The method of any one of claims 1 to 5, wherein after displaying the second interface on the second screen area, the method further comprises:
acquiring a number of angle changes within a preset amplitude range between the first screen area and the second screen area during a preset time period;
adjusting a display state of at least one of the first interface and the second interface according to the number of angle changes.

7. The method of claim 6, wherein adjusting the display state of at least one of the first interface and the second interface according to the number of angle changes comprises:
displaying the first interface on the second screen area, and displaying the second interface on the first screen area when the number of angle changes is a preset number.

8. The method of claim 6, wherein adjusting the display state of at least one of the first interface and the second interface according to the number of angle changes comprises:
implementing page turning operation on the first interface or the second interface to switch the first interface or the second interface to a Nth level interface according to the number of angle changes.

9. The method of claim 6, wherein the target interface is a video interface, wherein adjusting the display state of at least one of the first interface and the second interface according to the number of angle changes comprises:
determining a number of progress adjustments of the video interface according to the number of angle changes, wherein the number of progress adjustments comprises a number of fast-forward or fast-backward operations.

10. The method of claim 6, wherein the target interface is a video interface, wherein adjusting the display state of at least one of the first interface and the second interface according to the number of angle changes comprises:
turning up a volume of the video interface to a first volume level according to the number of angle changes while the first screen area rotates towards to the second screen area, wherein the first volume level corresponds to the number of angle changes;
turning down the volume of the video interface to a second volume level according to the number of angle changes while the first screen area rotates opposite to the second screen area, wherein the second volume level corresponds to the number of angle changes.

11. The method of claim 1, wherein determining the first interface and the second interface according to the target interface comprises:
determining a first display content and a second display content in the target interface;
determining the first interface according to the first display content;
determining the second interface according to the second display content.

12. The method of claim 1, wherein determining the first interface and the second interface according to the target interface comprises:
determining whether a video playing interface is in a full-screen playing mode when the first interface and/or the second interface include the video playing interface;
If the video playing interface is in a full-screen playing mode, obtaining the image collected by the camera;
determining an eye-gaze direction according to the image when the image includes a human face; and determining a target screen area according to the eye-gaze direction, and displaying the video interface on the target screen area.

13. The method of claim 1, wherein determining the first interface and the second interface according to the target interface comprises:
determining whether a video playing interface is in a full-screen playing mode when the first interface and/or the second interface include the video playing interface;
If the video playing interface is in a full-screen playing mode, determining a number of screen areas being rotated;
determining a unrotated screen area as a target screen area and displaying the video interface on the target screen area, when the number of screen areas being rotated is one.

14. The method of claim 1, wherein determining the first interface and the second interface according to the target interface comprises:
determining whether the target interface is displayed in full screen in the screen area composed of the first screen area and the second screen area;
if the target interface is displayed in full screen, determining first interface according to the display content of the target interface;
determining whether prompt messages are received in a preset period before a target time point, wherein the target time point is a point of time at which the change of the amplitude of rotation from an initial angle to the change within the specified amplitude is detected.
if the prompt messages are received; and determining an application program corresponds to the prompt information;
determining an interface corresponding to the prompt messages in the application program as the second interface.

15. The method of claim 14, further comprising:
if the prompt messages are not received, obtaining a current background interface; and
determining the second interface according to the current background interface.

16. The method of claim 1, further comprising:
determining a target time period that a current moment belongs to;
determining an interface with highest frequency of use in the target time period from an interface use record according to the category of target time, wherein the highest frequency of use is determined according to a number of use and usage duration; and
determining the interface with the highest frequency of use as the second interface.

17. The method of claim 1 to 16, wherein the foldable screen further comprises a shaft, the shaft is positioned on the folding line and the first screen area and the second screen area are rotatably coupled to the shaft; wherein monitoring the amplitude of rotation between the first screen area and the second screen area comprises:
acquiring a rotation path of the shaft collected by an angle sensor, wherein the angle sensor is positioned on the shaft; and
determining the amplitude of rotation between the first screen area and the second screen area according to the rotation path.

18. A split screen displaying apparatus for an electronic device with a foldable screen, the foldable screen comprises a first screen area and a second screen area on both sides of a folding line, the apparatus comprises:
a monitoring module, configured to monitor the amplitude of rotation between the first screen area and the second screen area in response to the foldable screen is in an unfolded state and a target interface is displayed on at least one of the first screen area and the second screen area;
a determining module, configured to determine a first interface and a second interface according to the target interface when the amplitude of rotation is within a specified amplitude range; and
a controlling module, configured to display the first interface on the first screen area, and display the second interface on the second screen area.

19. An electronic device, comprising:
one or more processors;
a memory;
a foldable screen, wherein the foldable screen comprises a first screen area and a second screen area on two sides of a folding line;
one or more applications; wherein the one or more applications are stored in the memory and configured for execution by the one or more processors configured to implement the method as claimed in any one of claims 1 to 17.

20. A computer-readable storage medium storing program codes thereon, the program codes being configured to be invoked by a processor to implement the method as claimed in any one of claims 1 to 17.
